Europäisches Patentamt

European Patent Office

Office européen des brevets

(19)

(11) Publication number: **0 028 091**
**B1**

# (12) EUROPEAN PATENT SPECIFICATION

(45) Date of publication of patent specification: **11.05.83**

(21) Application number: **80303612.8**

(22) Date of filing: **14.10.80**

(51) Int. Cl.³: **G 01 R 31/28,**
**G 06 F 11/16, H 01 L 27/10**

(54) Fault detection in integrated circuit chips and in circuit cards and systems including such chips.

(30) Priority: **18.10.79 US 86375**

(43) Date of publication of application:
**06.05.81 Bulletin 81/18**

(45) Publication of the grant of the patent:
**11.05.83 Bulletin 83/19**

(84) Designated Contracting States:
**CH DE FR GB IT LI NL SE**

(56) References cited:
**EP - A - 0 006 328**
**DE - A - 2 555 439**
**GB - A - 2 006 522**
**US - A - 3 466 544**
**US - A - 3 790 885**
**US - A - 4 096 989**

**NTZ, Vol. 32, No. 7, July 1979 J. MUCHA**
**"Testfreundliche VLSI-Schaltungen—Entwurfs-**
**und Prüfprinzipien—" pages 442 to 447**
**IBM TECHNICAL DISCLOSURE BULLETIN, Vol.**
**18, No. 8, January 1976 R. J. WESTHOFF**
**"Programmed Logic Array Error Detection**
**Circuit" pages 2575 to 2576**

(73) Proprietor: **SPERRY CORPORATION**
**1290, Avenue of the Americas**
**New York, N.Y. 10019 (US)**

(72) Inventor: **Sedmak, Richard Milan**
**6 Lindenwold Terrace**
**Ambler Pennsylvania 19002 (US)**

(74) Representative: **Michaels, Peter Albert**
**Sperry Univac Patent & Licensing Services M.S.**
**S2W1 Sperry Rand Ltd. Sperry Univac Centre**
**Brentfields**
**London NW10 8LS (GB)**

Courier Press, Leamington Spa, England.

Fault detection in integrated circuit chips and in circuit cards and systems
including such chips

The invention relates to integrated circuit chips designed to enable fault detection, and in particular, to systems for detecting faults in VLSI chips in circuit cards carrying such chips, and in computer systems incorporating such cards.

Very large scale integrated circuit chips present a problem in testing, because the logic density per chip is very high, and the availability of pin connections to the chip is limited. For example, a ten thousand gate VLSI chip may have 130 input/output pins. This makes it impossible to have separate access to all the individual logic gates in the chips, and the cost of writing a testing program to exercise all the logic, and the time required for carrying out such a sequence of tests, are prohibitive.

It is known, for example from the article "Program Logic Array Error Detection Circuit", by R. J. Westhoff, in IBM Technical Disclosure Bulletin, Vol. 18, pages 2575 and 1576 (January 1976), to provide duplicate logic on a chip together with comparators which compare the results of the logic and act as fault detectors, providing an error output signal if a disagreement should occur. The present invention, while not necessarily employing duplicate logic, also makes use of fault detection circuits incorporated in the chip.

The present invention makes use of internal stimulus generators arranged to provide a sequence of test signals under the control of supervisory control means at a plurality of points along the or each logic chain of the chip, whereby the chips in a system can be simultaneously self-verified, the occurrence of a fault being detected by fault detection circuits.

An article in NTZ Vol. 32, No 7 1979, pages 442—447 mentions a self-testing chip including its own internal stimulus generator and fault detecting circuit.

The invention will now be described with reference to the accompanying drawings, in which:

Figure 1 is a functional block diagram of a single VLSI chip embodying the invention;

Figure 2 is a functional block diagram of one form of the ISG supervisor shown as a single block in Figure 1;

Figure 3 is a functional block diagram of one form of the ISGs each shown as a single block in Figure 1;

Figure 4 is an expanded functional block diagram of Figure 1 illustrating one form of the combinational and/or sequential logic network and FDCs each shown as a single block in Figure 1;

Figure 5 is a waveform timing diagram for the implementation of the invention shown in Figures 2 to 4;

Figure 6 illustrates the assemblage of self-verifying VLSI chips into a complete system for fault processing; and

Figure 7 illustrates the application of the invention to a duplicate logic VLSI chip.

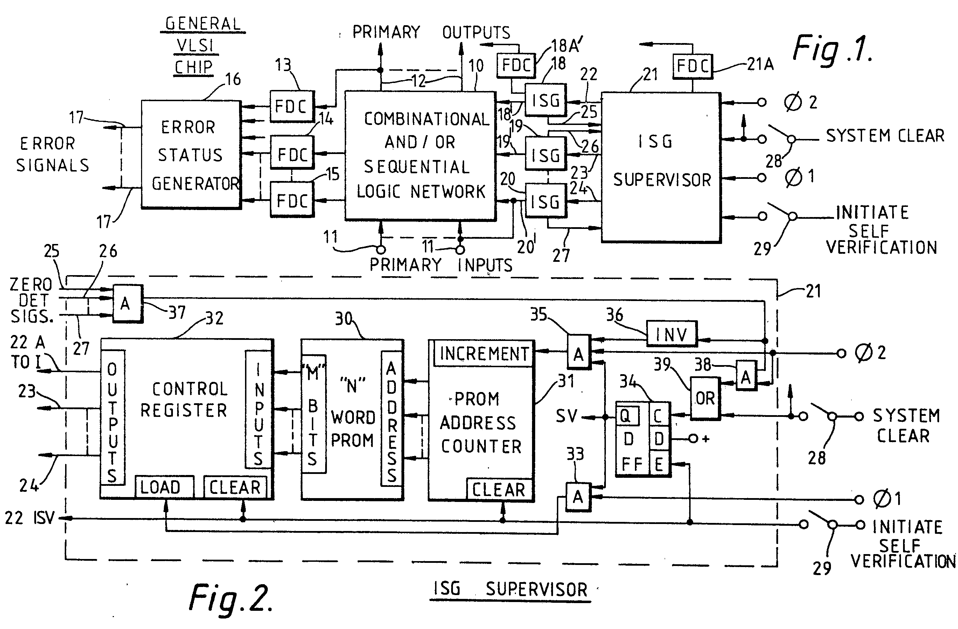

Figure 1 is a functional block diagram of a VLSI chip, with the components of the invention illustrated in broad functional block form. The normal processing logic 10 is illustrated as having a vertical information flow from primary inputs 11 through the network to primary outputs 12. Outputs from the logic network 10 are taken to fault detectors 13, 14 and 15 from selected points along the logic network, and the outputs of the fault detectors are routed to an error status generator 16 where the various signals from the fault detectors are encoded according to various occurrence combinations to produce error signals at the output of the error status generator 16 on the group lines 17.

The logic network 10 could be any digital circuitry as found in any computer. The fault detectors 13, 14 and 15 could for example be parity checkers, comparators, residue code checkers, interval timers or any other of the many well known checking circuits. The error status generator 16 could be a function table encoding matrix, as are commonly used. While three fault detectors are illustrated, it should be understood that any appropriate number of fault detector circuits are utilizable in accordance with the best design criteria for the particular type of logic network with which such circuits are being utilized. One use of a fault detector circuit configuration as illustrated in elements 10 through 17 is fully described in EP—A—0006328. However, the system according to the present invention does not require the use of duplicate functional or complementary logic, being also usable with a single chain logic.

To the right of the logic network 10 are shown a plurality of internal stimulus generators ISGs 18, 19 and 20, which have outputs feeding into the logic network 10 at various points along the network. The output signals from the ISGs 18, 19 and 20 are delivered to the logic network 10 by the multiple signal paths provided by each of conductor groups 18', 19' and 20'. These conductor groups will of course have different numbers of conductors, dependent upon the type of ISG utilized. A fault detector circuit 18A', which monitors ISG 18 for faults, and upon their detection sends signals to error status generator 16, is also shown. ISGs 19 through 20 are also monitored by fault detector circuits (not shown) which perform a similar function for these ISGs. The ISGs and some of the network logic are controlled by signals received from an ISG supervisor 21 over a group of signal lines 22, 23 and 24, which are shown as single lines, but each of which constitutes a conductor group. The signals generated by the ISGs are also returned to the ISG supervisor via the lines 25, 26 and 27. While three ISGs are illustrated, it is to be understood that the actual number of ISGs utilized and their particular locations and connections to the logic network 10 will be determined by the nature and complexity of the particular logic network.

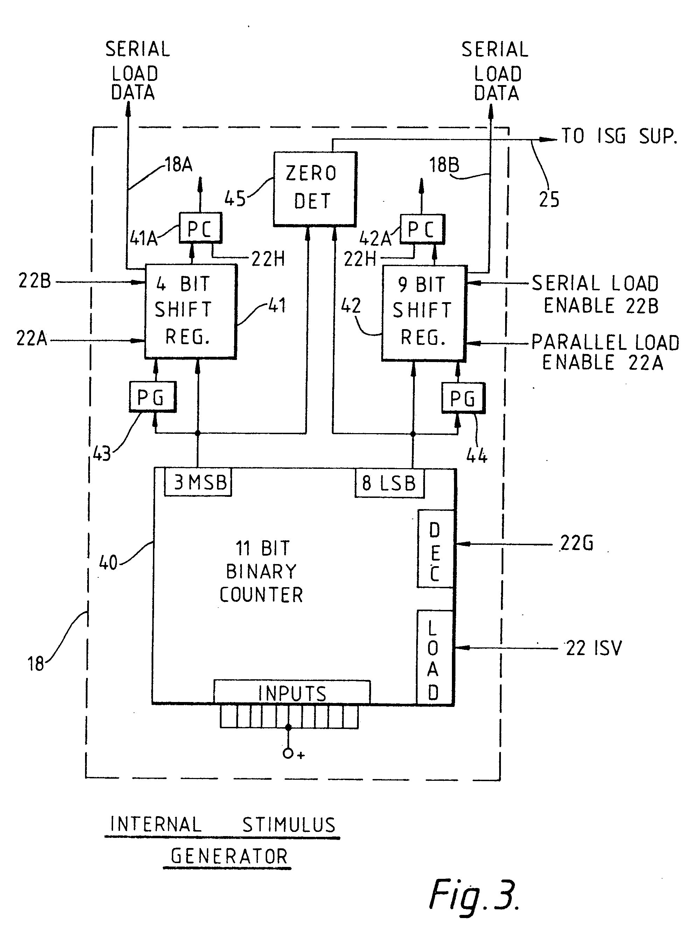

A fault detector circuit 21A monitors the ISG supervisor 21 for faults, and upon the detection of such, sends signals to the error status generator 16. Inputs to the ISG supervisor are shown to the right of the ISG supervisor 21, and consist of the clock pulse signals $\emptyset 1$ and $\emptyset 2$, a SYSTEM CLEAR signal represented as being generated by means of a switch 28, and an INITIATE SELF-VERIFICATION signal shown as being generated by a switch 29. A functional block diagram of one possible type of ISG supervisor is illustrated in Figure 2, while a logic diagram of one possible type of ISG 18 is illustrated in Figure 3.

Figure 2 shows one possible form of ISG supervisor 21. Within the ISG supervisor is a PROM (programmable read only memory) 30 which is M bits wide and N words deep, the particular makeup of the output M bits at any given time being controlled by the address sent to the PROM from a PROM address counter 31. The M bits read from a particular address of the PROM 30 are held in a control register 32 and provide the output signals 22A to 22I illustrated in Table 1, which will be described below, and also provide output signals on conductor groups 23 and 24. These signals are changed with the occurrence of each of the clock pulses $\emptyset 1$ after self-verification has been initiated, as will be explained. Self-verification is illustratively shown as being initiated by closure of switch 29 which generates the INITIATE SV signal, clearing the PROM address counter 31 and the control register 32. This signal is also routed to the ISGs, being signal 22ISV sent to ISG18.

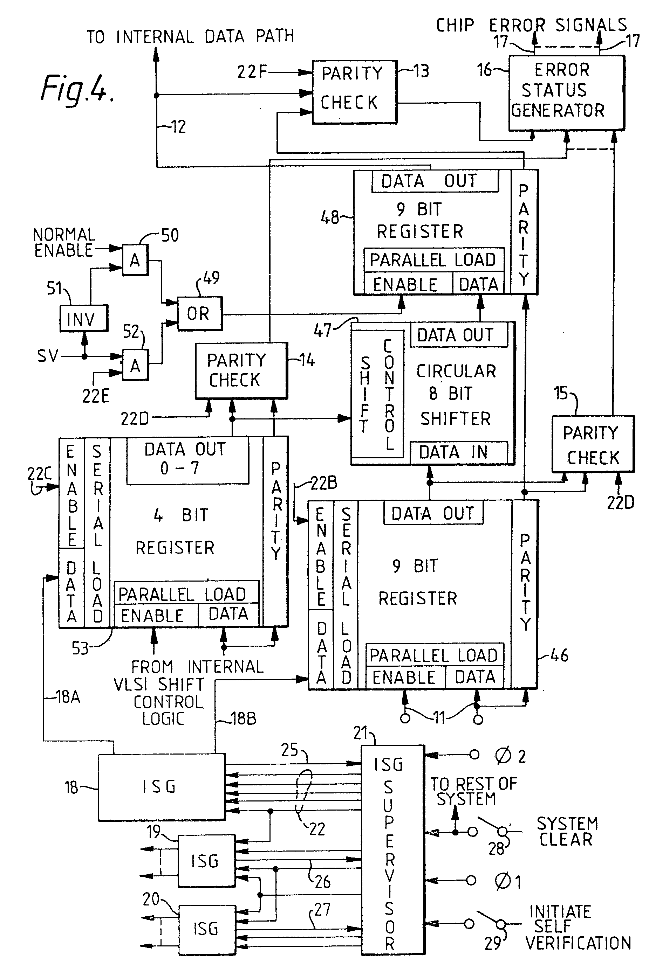

The LOAD input of the control register 32 is actuated by a signal from "and" gate 33 when the latter receives a coincidence of the $\emptyset 1$ clock pulse and the SV signal from the Q output of D flip-flop 34. The Q output arises when the "E" input of flip-flop 34 is triggered by the trailing edge of the INITIATE SV signal. The SV signal or Q output from flip-flop 34 is also directed to "and" gate 35 which also receives inputs from the $\emptyset 2$ clock pulse and inverter 36. The input signal to inverter 36 is generated by "and" gate 37 when there is a coincidence of zero detector signals occurring on ISG output lines 25, 26 and 27, this same output signal from "and" gate 37 also being presented as one of the inputs to "and" gate 38 which also receives the $\emptyset 2$ clock pulse. The output of "and" gate 38 is presented as one input to "or" gate 39 which also receives an input signal from the system clear switch 28. Either signal into "or" gate 39 produces an output signal to the "C" or CLEAR input of flip-flop 34, which, when it occurs, terminates the Q state of the flip-flop and the SV signal. One way of fault checking of the ISG supervisor 21 illustrated in Figure 2 could be by utilizing a parity checker as the fault detector circuit 21A, parity check of the output lines 22A through 22H being provided by a parity check bit on line 22I. Parity checking may be examined or strobed by each $\emptyset 2$ pulse. The operation of this particular ISG supervisor 21 will be more fully explained in conjunction with an explanation of Figure 4, but before turning to that figure, attention should be directed to Figure 3 which illustrates the internal logic of ISG 18.

Figure 3 illustrates one possible form that an ISG might take, and for purposes of illustration is to be considered as the ISG designated as 18 in the other figures of the drawings. The ISG includes an 11 bit binary counter 40, the three most significant output bits of which are routed in parallel to a 4 bit shift register 41 while the eight least significant output bits are routed in parallel to a 9 bit shift register 42. The output bits of the binary counter 40 are also respectively routed to parity generators 43 and 44 and zero detector 45. Each of the parity generators generates a parity bit which is also appropriately inserted into the respective shift registers 41 and 42. The parallel outputs of register 41 and register 42 are examined for parity respectively by parity checker 41A and parity checker 42A, and upon detection of faults, signals are sent to error status generator 16. Parity checking is strobed by the 22H signal. If checking of counter 40 and zero detector 45 is desired, duplication and comparison could be utilized.

The zero detector 45 generates a positive logic high output on conductor 25 when the 11 bit binary counter output has been decremented to zero.

The shift registers 41 and 42 are parallel loaded from the 11 bit binary counter 40 in the presence of a PARALLEL LOAD ENABLE signals 22A received from the ISG supervisor 21, while readout from the shift registers on lines 18A and 18B is a serial readout which takes place in the presence of SERIAL LOAD ENABLE signal 22B from the ISG supervisor 21. The 11 bit binary counter is initially jammed to a state of all "ones" at the output when the counter 40 LOAD input receives the 22ISV signal from the ISG supervisor.

After the output of all "ones" from the 11 bit counter 40 has been processed through the logic, a 22G signal from the ISG supervisor 21 is presented to the decrement input of the counter 40, causing the count in the counter to be reduced by one, which changes the arrangement of the counter output bits. The decrementing process continues under control of the ISG supervisor until the count in the binary counter 40 has been reduced to zero, whereupon this condition is detected by the zero detector 45 which sends a high signal back to the ISG supervisor over line 25 to "and" gate 37. When all the ISGs have completed their routines, whatever they may be, and however many stages they may take, all the input signals to "and" gate 37 in Figure 2 will be high, and will gate through to the input of inverter 36 and "and" gate 38. Inverter 36 then presents a low output to "and" gate 35, effectively closing the gate, so that no further incrementing of the PROM address counter 31 can occur. The next $\emptyset$2 clock pulse is gated through "and" gate 38 and "or" gate 39 to the "C" input of flip-flop 34, clearing the flip-flop, and suppressing the Q state. This terminates the SV signal, thereby closing "and" gates 33 and 35. As will be subsequently seen in connection with Table 1, the decrement signal occurs at the end of a cycle, and the PROM address counter will be at an address such that all the output signals from the control register 32 will be zeros, and the ISG and ISG supervisor outputs will be such as to return the logic network 10 to its normal processing state. At this point, the ISGs are effectively locked out of inter-action with the logic network 10.

Consider now Figure 4, which is an expansion of Figure 1 to illustrate a specific implementation of a portion of logic network 10, and the employment of parity checkers as fault detector circuits 13, 14 and 15. As shown, the primary inputs to the logic network 10 are connected to the parallel load inputs of a 9 bit register 46, which also has a serial load mode whereby data from the ISG 18 can be serially loaded from the ISG 9 bit shift register 42 via line 18B when the serial load input is enabled by ISG supervisor control signal 22B. The output of the 9 bit register 46 is presented to the input of 8 bit shifter 47 and also to parity check fault detector 15, the parity bit from register 46 being also directed to the parity check fault detector 15 and to the parity bit input of 9 bit register 48. The output of the circular 8 bit shifter 47 is routed to the input of the 9 bit register 48 which has its enable data control input controlled from "or" gate 49.

The normal enable signal for 9 bit register 48, which is utilized in the normal operation of the logic, is presented to "or" gate 49 from "and" gate 50 which has its other input normally high from the output from inverter 51 when the SV signal from the ISG supervisor is low, that being when self-verification is not in progress. When self-verification is in progress, so that the SV signal is high, it enables "and" gate 52 and inhibits "and" gate 50 through inverter 51. The normal enable signal is thereby prevented from controlling 9 bit register 48, this control instead coming from "and" gate 52 when the ISG supervisor produces control signal 22E. The shift control for the 8 bit shifter 47 is produced by 4 bit register 53, which has its parallel load inputs connected to the outputs of another point in the logic chain within the VLSI. The serial load data input of register 53 is connected to the output of ISG 4 bit shift register 41 via line 18A, while having its serial load enable circuits controlled by ISG supervisor output signal 22C.

Referring now also to Figures 2, 3, 5 and Table 1, assume that the apparatus is to be turned on and that Figure 4 represents a part of a single VLSI chip. A pulse, represented in the Figures by the momentary closing of switch 28, is first generated to clear the system, the SYSTEM CLEAR signal passing to "or" gate 39 and therethrough to the clear input "C" of D flip-flop 34 thereby ensuring that the flip-flop is not in the Q state. With the system now cleared, the INITIATE SELF-VERIFICATION signal is generated, represented by the momentary closing of switch 29. This signal is transmitted to the CLEAR inputs of PROM address counter 31 and control register 32 to clear the control register and clear the PROM address counter to zero, and is also routed out of the ISG supervisor as signal 22ISV to the LOAD input of 11 bit binary counter 40 in ISG 18, thereby causing the latter to be set to a count at its outputs of all "ones". The outputs of binary counter 40 are presented to the inputs of the shift registers 41 and 42 in ISG 18 and to the parity bit generators 43 and 44. However, this data is not entered into the shift registers until the parallel load enable signal 22A is received from the ISG supervisor.

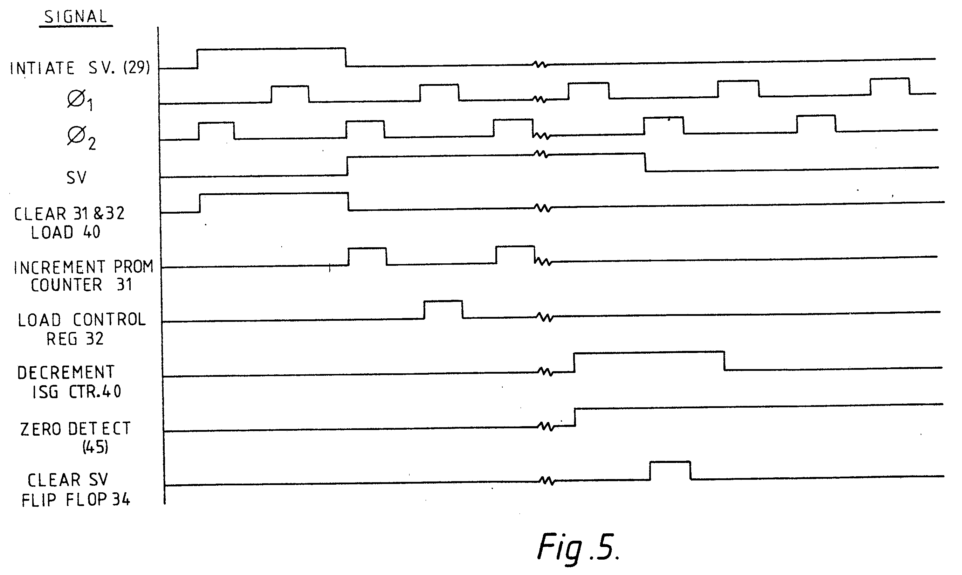

As seen in the waveform timing diagram of Figure 5, while the INITIATE SELF-VERIFICATION signal cleared the PROM counter 31 and control register 32 and loaded the ISG counter, it does not have any effect at the E input of flip-flop 34 until its trailing edge appears, whereupon flip-flop 34 is set to its Q state and the SV signal arises. The SV signal is transmitted to inverter 51 to inhibit gate 50 and is also transmitted to "and" gate 52 to enable the latter, as shown in Figure 4. The SV signal, together with the high output of inverter 36 enables "and" gate 35 to pass the next $\emptyset$2 clock pulse and increment the PROM address counter 31 to step it from its 0 address to address 1. Address 1 is shown in Table 1, and the designated conditions on the control register output lines 22A to 22I corresponding to address 1 arise when the next $\emptyset$1 clock pulse is passed through "and" gate 33 to the LOAD input of control register 32 to thereby transfer these M bits into the control register from the PROM 30.

TABLE 1

| PROM ADDRESS | A | B | C | D | | E | F | G | H | I |
|---|---|---|---|---|---|---|---|---|---|---|
| 0 | | | | | NOP | | | | | |
| 1 | 1 | 0 | 0 | 0 | | 0 | 0 | 0 | 0 | 1 |
| 2 | | | | | NOP | | | | | |
| 3 | 0 | 1 | 1 | 0 | | 0 | 0 | 0 | 1 | 1 |
| 4 | | | | | NOP | | | | | |
| 5 | 0 | 1 | 1 | 0 | | 0 | 0 | 0 | 0 | 0 |
| 6 | | | | | NOP | | | | | |
| 7 | 0 | 1 | 1 | 0 | | 0 | 0 | 0 | 0 | 0 |
| 8 | | | | | NOP | | | | | |
| 9 | 0 | 1 | 1 | 0 | | 0 | 0 | 0 | 0 | 0 |
| 10 | | | | | NOP | | | | | |
| 11 | 0 | 1 | 0 | 0 | | 0 | 0 | 0 | 0 | 1 |
| 12 | | | | | NOP | | | | | |
| 13 | 0 | 1 | 0 | 0 | | 0 | 0 | 0 | 0 | 1 |
| 14 | | | | | NOP | | | | | |
| 15 | 0 | 1 | 0 | 0 | | 0 | 0 | 0 | 0 | 1 |
| 16 | | | | | NOP | | | | | |
| 17 | 0 | 1 | 0 | 0 | | 0 | 0 | 0 | 0 | 1 |
| 18 | | | | | NOP | | | | | |
| 19 | 0 | 1 | 0 | 0 | | 0 | 0 | 0 | 0 | 1 |
| 20 | | | | | NOP | | | | | |
| 21 | 0 | 0 | 0 | 1 | | 0 | 0 | 0 | 0 | 1 |
| 22 | | | | | NOP | | | | | |
| 23 | 0 | 0 | 0 | 0 | | 1 | 0 | 0 | 0 | 1 |
| 24 | | | | | NOP | | | | | |
| 25 | 0 | 0 | 0 | 0 | | 0 | 1 | 0 | 0 | 1 |
| 26 | | | | | NOP | | | | | |
| 27 | 0 | 0 | 0 | 0 | | 0 | 0 | 1 | 0 | 1 |
| 28 | | | | | NOP | | | | | |
| 29 | | | | | NOP | | | | | |
| 30 | | | | | NOP | | | | | |
| 31 | | | | | NOP | | | | | |

NOP=ALL ZEROS

At address 1 the 22A signal goes high and causes the respective outputs from the ISG binary counter 40 and parity bit generators 43 and 44 to be parallel loaded into the 4 bit and 9 bit shift registers 41 and 42. The PROM address counter 31 now cyclically steps through the entire sequence of PROM addresses under control of clock pulse Ø2, which increments the address counter each time it occurs. After the address counter 31 is stepped to change the address in the PROM 30, the next Ø1 clock pulse transfers the PROM output to the control register 32 to thereby change the conditions on the output control lines 22A to 22I. As seen in Table 1, all the even addresses of the PROM 30 are designated NOP or ALL ZEROS, which creates pulses and ensures stabilization of the system before the next operation occurs. Understanding that this is what occurs, the progress of the checkout can be observed by following the sequence of PROM addresses.

When the PROM address has stepped to address 3 the 22B and 22C signals are generated. Registers 46 and 53 are shown as being loaded serially in order that no additional stages of logic need be added to the normal data path. The 22B signal enables serial load of 9 bit register 46 and enables the data in the ISG shift registers 41 and 42 to be serially shifted one bit at a time out of the registers on lines 18A and 18B to the serial load data inputs of the logic network registers 53 and 46 respectively. The 22C signal enables serial load of 4 bit register 53. Since only one bit can be shifted during each clock pulse, the 22C signal persists for four successive odd PROM addresses so that the four bits from ISG shift register 41 may be successively shifted into 4 bit register 53, after which the 22C signal returns to the zero state and no further shifting can occur from ISG shift register 41.

Similarly the 22B signal persists for nine successive odd PROM addresses so that the nine bits in ISG shift register 42 may be successively shifted into logic network register 46. The data in the logic network registers 46 and 53 being now complete, parity check is carried out at the next PROM address which is address 21 causing the generation of the 22D signal which actuates the parity check in checkers 14 and 15, the outputs from these checkers being routed to the error status generator 16.

The PROM address 23 causes the generation of the 22E signal, which is transmitted to "and" gate 52, producing an output which is routed through "or" gate 49 to the enable input of 9 bit register 48, so that the data from the circular shifter 47 are entered into the 9 bit shifter 48. PROM address 25 causes the 22F signal to be generated as a strobing signal which together with the data and parity output bits from Register 48 are presented to parity checker 13, the output of which is also routed to error status generator 16. The outputs of all of the parity checkers are examined in the error status generator 16 and appropriate error signals 17, if any, are generated for subsequent processing. This completes the checking of that segment of the illustrated logic network 10 with respect to the first output bit pattern from the ISG 18 which consists of all "ones".

It is now necessary to change the count in the 11 bit binary counter 40 in ISG 18 and repeat the entire process. This occurs when the PROM address counter 31 is shifted to its next odd count, which is address 27, thereby generating the 22G signal. The 22G signal is routed to the decrement input of 11 bit binary counter 40 of ISG 18 and thereby reduces the count at the output of the counter 40 by one. The next four PROM addresses are illustrated in Table 1 as being NOP, since in the illustrated case the PROM would be a standard 32 word device. When the PROM address counter cycles back to address 0 and then address 1, the entire sequence already described is repeated. This sequence of events continues cyclically until the 22G signal decrements the count in the binary counter 40 to zero.

At this point the zero detector 45 detects this condition and sends a high signal back along conductor 25 to ISG "and" gate 37. The high at "and" gate 37 on line 25 is not gated through unless there are also highs on lines 26 and 27 at the input of the "and" gate 37. Since ISGs 19 and 20 may be structured differently from ISG 18, it may be that control signals are still being generated on some of their control lines 23 and 24 during PROM addresses 28 through 31. When however they have completed their sequences and have also produced zero detection signals, the coincidence of all of these signals at "and" gate 37 passes through to inverter 36 thereby producing a low at the input of "and" gate 35 and closing the gate to further incrementing of the PROM address counter 31. Additionally, the "and" gate 37 output enables "and" gate 38, so that the next $\emptyset$2 clock pulse is gated through, and through "or" gate 39, to clear flip-flop 34 and suppress the SV signal, thus also inhibiting "and" gate 33.

At this point the self-verification of this particular VLSI chip has been completed. Other VLSI chips may take shorter or longer times, or the same time, to complete their self-verifying. However, error signals 17 generated from the error status generator 16 of each of the VLSIs will have been being processed during the verification procedure and failure indications will have been recorded as to type and location.

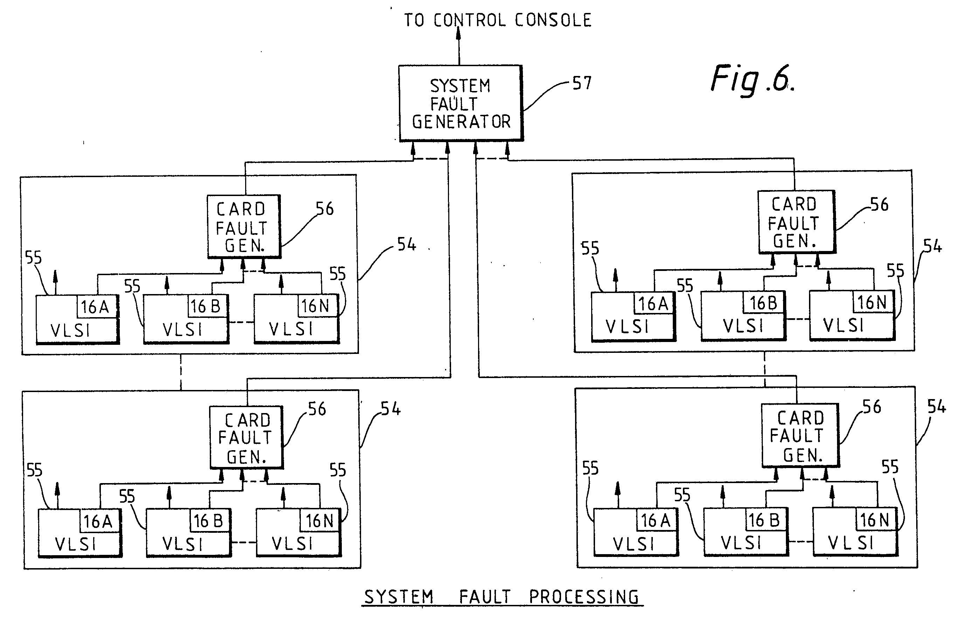

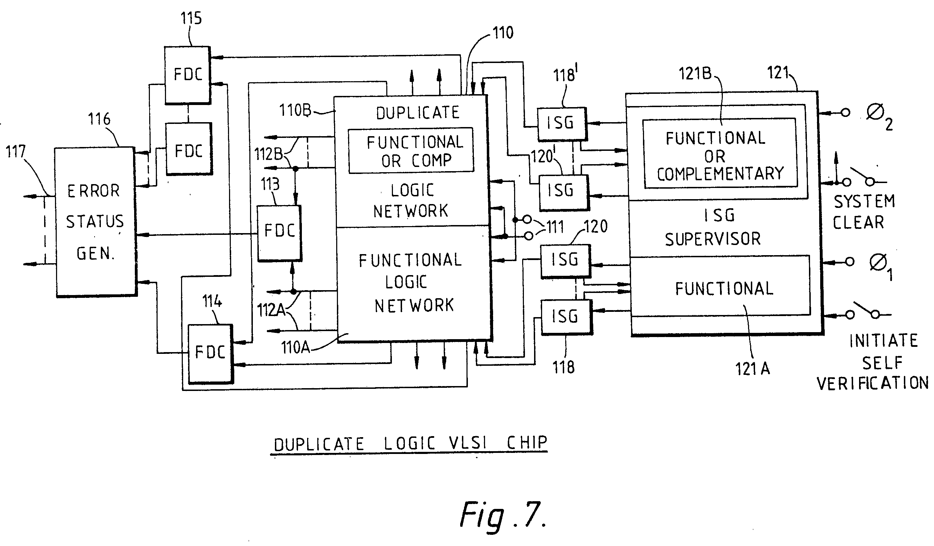

An extension of the above-described fault processing is illustrated in Figure 6, which shows the manner in which such fault processing may be extended to an entire system. A plurality of circuit cards 54 are shown, each of which carries a plurality of VLSI chips 55. The VLSI chips on each card are of the type illustrated in Figure 1, or Figure 7 to be described, each including an error status generator. In Figure 6, these have been labelled as 16A and 16B through 16N. The output signals from each of the error status generators 16 are routed for processing to a card fault generator 56, which correlates the various signals from the different error status generators and encodes the various combinations of signals to produce error signals at the output which represent detected faults in all the VLSIs carried by that particular card, as well as in the card wiring.

The signals from the assemblage of card fault generators 56 are routed to a system fault generator 57, which in turn correlates the signals from all the cards 54 and VLSI's 55. The card fault generators 56 and system fault generator 57 may also be encoding function tables, or any other desired type of encoding system. The output signals from the system fault generator 57 are then routed to the system control console for display and/or recording, in accordance with the nature of the detected faults.

Figure 7 illustrates the invention shown in and described with reference to Figure 1 applied to the duplicate logic VLSI fault detection circuit configuration described in EP—A—0006328. The elements shown in Figure 1 also appear in Figure 7, the relevant reference characters being preceded by the numeral 1. For example the logic network 10 shown in Figure 1 is shown in Figure 7 as the overall logic network 110 consisting of the functional logic network 110A and the duplicate logic network 110B, which latter may either be a duplicate of the functional logic network 110A or may be duplicate complementary logic, as explained in EP—A—0006328.

When duplicate logic is utilized for the logic network 110, the same system is employed for the ISGs and the ISG supervisor. Accordingly, the ISG supervisor 121 consists of a functional logic ISG supervisor 121A and either a functional or complementary logic ISG supervisor 121B, the particular type of supervisor 121B being the same as the type of logic used in network 110B, that is, functional or complementary. Each of the ISG supervisors 121A and 121B is organized with its own set of ISGs 118 through 120 and 118' through 120' respectively. The outputs of these ISGs are routed to the logic networks 110A and 110B, as already described in connection with Figures 1 to 4.

Outputs are taken from multiple points within the logic networks 110A and 110B and are routed to an appropriate number of fault detector circuits 113, 114 and the plural detectors 115, the outputs of which are fed to an error status generator 116, which examines the received signals and encodes them to produce error output signals on lines 117. The fault detector circuits 113 through 115, in addition to checking for faults solely within each of the networks 110A and 110B, also check the operation of the two logic networks 110A and 110B against each other, in order to ensure that the same processing results are being produced by both networks at comparable logic points in the two networks 110A and 110B. This is indicated in Figure 7 by showing the outputs of the logic networks to a given fault detector circuit as being taken from corresponding points in the two logic networks. That is, the logic network outputs at 112A and 112B are both compared in fault detector circuit 113, while the inputs to fault detector circuit 114 are taken from the corresponding points in the processing chains in the logic networks 110A and 110B, and similarly for the inputs to fault detector circuit 115.

## Claims

1. An integrated circuit chip including a data processing chain (10), and a plurality of fault detecting circuits (13, 14, 15) coupled to the data processing chain, characterised in that the chip also includes a plurality of internal stimulus generators (18, 19, 20) which in response to control signals, generate test signal patterns and apply them to at least intermediate points of the data processing chain (10), supervisory control means (21) which in response to an INITIATE SELF VERIFICATION signal (22ISV) generates said control signals (22A to 22I, 23, 24) to cause the said test signal patterns to be generated and applied, and error status generator means (16) receiving the outputs of the fault detecting circuits (13, 14, 15) and providing error signals indicative of fault conditions at various points of the data processing chain (10).

2. An integrated circuit chip according to claim 1 including further fault detecting circuits (18A', 21A) having their inputs coupled to the supervisory control means (21) and to the internal stimulus generators (18, 19, 20), and their outputs coupled to the error status generator means (16).

3. An integrated circuit chip according to claim 1 or claim 2 in which the data processing chain (10) includes logic devices (46, 53) normally operative in a parallel-load mode, and which, under control of the supervisory control means (21), are enabled to be loaded with test signal patterns from the internal stimulus generators (18, 19, 20) in a serial-load mode.

4. An integrated circuit chip according to any preceding claim including, in addition to the data processing chain (110A), a duplicate functional or complementary logic chain (110B), and with correspondingly duplicate functional or complementary logic supervisory control means (121A, 121B), and in which the fault detecting circuits are arranged to check the operation of the two data processing chains against each other.

5. A printed circuit card (54) carrying a plurality of chips (55) according to any preceding claim together with a card fault generator (56), the outputs of the error status generator means (16A, 16B, etc.) of each chip (55) being connected to the inputs of the card fault generator, the output of the card fault generator (56) providing error signals representing detected faults in all the chips carried by the card as well as in the card wiring.

6. A system including a plurality of printed circuit cards (54) according to claim 5 together with a system fault generator (57) having its inputs connected to the outputs of the card fault generators (56) and providing an output in accordance with the nature and location of the detected faults.

### Patentansprüche

1. Integriertes Schaltungschip mit einer Kette (10) von datenverarbeitenden Schaltungskomponenten und mit mehreren an dieser Kette angeschlossenen Fehleranzeige-Schaltungen (13, 14, 15), dadurch gekennzeichnet, daß das Chip außerdem mehrere innere Antriebsgeneratoren (18, 19, 20), die in Abhängigkeit von Steuersignalen Prüfsignalfolgen erzeugen und diese zumindest Zwischenanschlüsen der Kette (10) zuleiten, eine Überwachungssteuer-Anordnung (21), die auf ein die Selbstüberprüfung auf Fehler einleitendes Signal (22ISV) hin die Steuersignale (22A bis 22I, 23, 24) zur Erzeugung und Zuleitung der Prüfsignalfolgen hervorbringt, und einen Fehlerzustands-Generator (16) enthält, der die von den Fehleranzeige-Schaltungen (13, 14, 15) ausgegebenen Signale empfängt und Fehlersignale abgibt, die Fehlerzustände an mehreren Punkten der datenverarbeitenden Kette (10) angeben.

2. Integriertes Schaltungschip nach Anspruch 1, das weitere Fehleranzeige-Schaltungen (18A', 21A) enthält, deren Eingangsklemmen mit der Überwachungssteuer-Anordnung (21) und den inneren Antriebsgeneratoren (18, 19, 20) und deren Ausgangsklemmen mit dem Fehlerzustands-Generator (16) verbunden sind.

3. Integriertes Schaltungschip nach Anspruch 1 oder Anspruch 2, bei dem die datenverarbeitende Kette (10) normalerweise mit parallelen Lasten arbeitende logische Einrichtungen (46, 53) enthält, die unter dem Einfluß der Überwachungssteuer-Anordnung (21) von den inneren Antriebsgeneratoren (18, 19, 20) mit den Prüfsignalfolgen seriell beladen werden können.

4. Integriertes Schaltungschip nach einem vorhergehenden Anspruch, das zusätzlich zu der datenverarbeitenden Kette (110A) eine komple-

mentäre logische oder eine Doppelfunktions-kette (110B) mit einer entsprechenden komplementären, logischen oder Doppelfunktions-Überwachungssteuer-Anordnung (121A, 121B) enthält, wobei die Fehleranzeige-Schaltungen zur gegenseitigen Überprüfung der Arbeitsweise der beiden datenverarbeitenden Ketten angeordnet sind.

5. Gedruckte Schaltungsplatte (54), die mehrere Chips (55) nach einem vorhergehenden Anspruch gemeinsam mit einem Plattenfehler-Generator (56) trägt, mit dessen Eingängen die Ausgänge des Fehlerzustands-Generators (16A, 16B usw.) jedes Chip (55) verbunden sind, wobei der Plattenfehler-Generator (56) Fehlersignale liefert, die die Fehler wiedergeben, die in allen von der Platte getragenen Chips, sowie in der Verdrahtung der Platte wahrgenommen werden.

6. System, das mehrere gedruckte Schaltungsplatten (54) nach Anspruch 5 gemeinsam mit einem Systemfehler-Generator (57) aufweist, dessen Eingänge an den Ausgängen der Plattenfehler-Generatoren (56) angeschlossen sind, und der Ausgangssignale entsprechend der Art und dem Platz der wahrgenommenen Fehler abgibt.

**Revendications**

1. Plaquette de circuits intégrés ou "puce" incluant une chaîne de traitement de données ou d'informations (10) et un certain nombre de circuits de détection de défaut (13, 14, 15) couplés à la chaîne de traitement de donées, caractérisée en ce que la plaquette comporte également un certain nombre de générateurs de stimuli internes (18, 19, 20) qui, en réponse à des signaux de commande, engendrent des configurations de signaux de test et les appliquent à, au moins certains points intermédiaires de la chaîne de traitement de données (10), des moyens de commande de supervision (21) qui, en réponse à un signal "INITIATE SELF VERIFICATiON (22ISV)" engendrent lesdits signaux de commande (22A à 22I, 23, 24) afin de provoquer la génération de ladite configuration de signaux de test et son application et des moyens de génération d'état d'erreur (16) recevant les signaux de sortie des circuits de détection de défaut (13, 14, 15) et fournissant des signaux d'erreur indicatifs des conditions de défaut en divers points de la chaîne de traitement (10).

2. Plaquette de circuits intégrés selon la revendication 1, incluant, en outre, des circuits de détection de défaut (18A', 21A) dont les entrées sont couplées aux moyens de commande de supervision (21) et aux générateurs de stimuli internes (18, 19, 20) et dont les sorties sont couplées aux moyens de génération d'état d'erreur (16).

3. Plaquette de circuits intégrés selon la revendication 1 ou 2 dans laquelle la chaîne de traitement de données ou d'informations (10) comprend des dispositifs logiques (46, 53) opérant normalement dans un mode de chargement parallèle et qui sous la direction des moyens de commande de supervision (21) sont activés pour être chargés avec les configurations de signaux de test provenant des générateurs de stimuli internes (18, 19, 20) dans un mode de chargement série.

4. Plaquette de circuits intégrés selon l'une quelconque des revendications précédentes incluant, en plus de la chaîne de traitement de données ou d'informations (110A), une chaîne logique fonctionnelle double ou complémentaires (110B) et avec des moyens de commande de supervision logiques fonctionnels doubles ou complémentaires (121A, 121B), et dans laquelle les circuits de détection de défaut sont arrangés pour contrôler le fonctionnement des deux chaînes de traitement de données ou d'informations l'une par rapport à l'autre.

5. Carte de circuits imprimés (54) portant un certain nombre de plaquettes ou de "puces" (55) conformes à l'une quelconque des revendications précédentes conjointement avec un générateur de défaut de carte (56), les sorties des moyens de génération d'état d'erreur (16A, 16B, etc) de chaque plaquette (55) étant connectées aux entrées du générateur de défaut de carte, les sorties du générateur de défaut de carte (56) fournissant des signaux d'erreur représentant les défauts détectés dans toutes les plaquettes portées par la carte, ainsi que dans le câblage de la carte.

6. Système ou montage comprenant un certain nombre de cartes de circuits imprimés (54) suivant la revendication 5, conjointement avec un générateur de défauts de systèmes ou de montages (57) dont les entrées sont connectées aux sorties des générateurs de défauts de cartes (56) et qui fournit un signal de sortie en accord avec la nature et l'emplacement des défauts détectés.

*Fig.1.*

GENERAL VLSI CHIP

ISG SUPERVISOR

ERROR STATUS GENERATOR

COMBINATIONAL AND/OR SEQUENTIAL LOGIC NETWORK

PRIMARY OUTPUTS

PRIMARY INPUTS

ERROR SIGNALS

SYSTEM CLEAR

INITIATE SELF VERIFICATION

Ø2  Ø1

*Fig.2.*

ISG SUPERVISOR

INV

OR

FF

PROM ADDRESS COUNTER

"M" × "N" WORD PROM

CONTROL REGISTER

INCREMENT

CLEAR

LOAD  CLEAR

INPUTS

OUTPUTS

ADDRESS

BITS

ZERO DET. SIGS.

22 A TO L

SV

ISV

SYSTEM CLEAR

INITIATE SELF VERIFICATION

Ø2  Ø1

INTERNAL STIMULUS
GENERATOR

*Fig. 3.*

Fig.4.

0 028 091

Fig.5.

TO CONTROL CONSOLE

SYSTEM FAULT GENERATOR — 57

Fig.6.

CARD FAULT GEN. 56

CARD FAULT GEN. 56

54

54

55

55

55

55

55

55

55

55

55

55

16A VLSI   16 B VLSI   16N VLSI

16A VLSI   16 B VLSI   16N VLSI

CARD FAULT GEN. 56

CARD FAULT GEN. 56

54

54

55

55

55

55

55

55

55

55

55

55

16A VLSI   16 B VLSI   16N VLSI

16 A VLSI   16 B VLSI   16N VLSI

SYSTEM   FAULT   PROCESSING

0028091

DUPLICATE LOGIC VLSI CHIP

Fig.7.

0 028 091